# EUROPÄISCHE PATENTSCHRIFT

(11) **EP 1 530 694 B1**
(45) Veröffentlichungstag und Bekanntmachung des Hinweises auf die Patenterteilung: **19.10.2011**
(21) Anmeldenummer: 03797221.3
(22) Anmeldetag: 01.08.2003
(51) Int. Cl.: F16J 15/34

(54) **GETEILTE MITNEHMERANORDNUNG FÜR EINE GLEITRINGDICHTUNG**
DIVIDED DRIVER DEVICE FOR A SLIP RING SEAL
DISPOSITIF D'ENTRAINEMENT DIVISE DESTINE A UN JOINT A ANNEAU GLISSANT

(30) Priorität: 21.08.2002 DE 20212847 U
(43) Veröffentlichungstag der Anmeldung: 18.05.2005
(73) Patentinhaber: EagleBurgmann Germany GmbH & Co. KG, 82515 Wolfratshausen (DE)
(72) Erfinder: GIGGENBACHER, Markus, 82541 Münsing (DE); LEDERER, Günther, 82538 Geretsried (DE); PFEIL, Dieter, 82547 Eurasburg (DE); RIEDL, Michael, 82335 Berg (DE); THELKE, Jörg, 82515 Wolfratshausen (DE)
(74) Vertreter: Schmidt, Horst
(86) Internationale Anmeldenummer: PCT/EP2003/008522
(87) Internationale Veröffentlichungsnummer: WO 2004/027294

(56) Entgegenhaltungen:
- EP-A- 0 658 713
- GB-A- 2 361 966
- US-A- 5 725 220
- US-A- 6 076 832

## Beschreibung

Die Erfindung betrifft eine geteilte Mitnehmeranordnung für eine Gleitringdichtung gemäss dem Oberbegriff des Anspruches 1. Sie betrifft ferner eine mit einer derartigen Mitnehmeranordnung ausgestattete geteilte Gleitringdichtung.

Mitnehmeranordnungen dienen bei Gleitringdichtungen dem Zweck, den rotierenden Gleitring einerseits zu halten und andererseits eine drehfeste Verbindung zwischen dem Gleitring und einem rotierenden Bauteil, z.B. einer Welle herzustellen. Infolge von Verschleiss oder anderen Umständen kann im Laufe der Betriebszeit einer Gleitringdichtung ein Austausch der Gleitringe erforderlich werden. Bei Gleitringdichtungen an schwer zugänglichen Stellen einer Gerätschaft, kann ein derartiger Austausch schwierig oder unmöglich sein bzw. die gleichzeitig Demontage von anderen Aufbauteilen der Gerätschaft erforderlich machen. Es wurden daher schon geteilte Gleitringdichtungen mit geteilten Mitnehmeranordnungen vorgeschlagen, die sich an einer Welle montieren und demontieren lassen, ohne dass vorher eine freie Zugänglichkeit zur Montagestelle geschaffen werden muss. Auch kommen geteilte Gleitringdichtungen häufig zum Einsatz bei grossen Wellendurchmessern z.B. Schiffsantriebswellen, Walzwerkswellen etc., wo geteilte Gleitringdichtungen gegenüber ungeteilten einen Montagevorteil bieten. Bekannt (GB-A-2361966) ist eine geteilte Gleitringdichtung mit einer geteilten Mitnehmeranordnung, die an einem axialen Ende einen Gleitring und am anderen Ende Mittel zum Verklemmen mit einer Welle aufweist. Selbst bei sorgfältiger Montage kann nicht ausgeschlossen werden, dass die klemmende Verbindung der Mitnehmeranordnung mit der Welle zu Verwerfungen der Ringsegmente führen kann, die Auswirkungen auf die genaue Position des betreffenden Gleitringes haben können. Infolgedessen erweist es sich ausserdem als problematisch, die Ringhälften in einer ausreichenden dichten Beziehung zueinander zu halten, es sei denn, es werden Dichtungshilfsmittel, wie Dichtungsringe oder dergleichen vorgesehen. Die Montagearbeiten gestalten sich in jedem Fall aufwändig und erfordern eine besondere Sorgfalt.

Der Erfindung liegt die Aufgabe zugrunde, eine geteilte Mitnehmeranordnung für eine Gleitringdichtung der gattungsgemässen Art zu schaffen, die sich problemlos an einem rotierenden Bauteil montieren und demontieren lässt und gleichzeitig eine präzise Positionierung des Gleitringes gewährleistet. Ferner soll die Mitnehmeranordnung eine Abdichtung zwischen denjenigen Ringhälften, an denen es einer Abdichtung bedarf, ohne Dichtungshilfsmittel erlauben.

Diese Aufgabe wird erfindungsgemäss durch die Merkmale im kennzeichnenden Teil des Anspruches 1 gelöst. Ein Merkmal der erfindungsgemässen Mitnehmeranordung ist deren axiale Unterteilung in einen Haltering und einen Montagering, die grundsätzlich unabhängig voneinander sind, jedoch in drehmomentübertragender Beziehung miteinander stehen. Der Haltering dient zur Halterung des Gleitringes, während der Montagering die Aufgabe übernimmt, die drehfeste drehmomentübertragende Verbindung zur Welle zu schaffen. Beide Ringe selbst sind in wenigstens jeweils zwei Ringhälften radial geteilt, die nach Anordnung um der Welle gegeneinander verspannt werden können. Der Haltering umgreift die Welle in Lossitz mit radialem Spiel und ist, anders als der Montagering, keinen Montagekräften ausgesetzt. Der Haltering kann daher eine (ggf. selbst-)zentrierte Position in Bezug auf die Welle annehmen, was optimale Bedingungen für den Betrieb des am Haltering angeordneten Gleitringes schafft. Die Erfindung ermöglicht darüber hinaus eine vorteilhafte gegenseitige Abdichtung der Ringhälften des Halteringes durch Metall-zu-Metall-Berührung zwischen den Stirnflächen der Ringhälften, d.h. ohne Vorsehen von Dichtungshilfsmitteln. Durch diese Massnahmen kann die Montage der Mitnehmeranordnung mit vergleichsweise geringem Arbeitsaufwand schnell und auch von weniger geschultem Personal durchgeführt werden, da in Bezug auf die Festlegung des Montageringes an der Welle keine besondere Sorgfalt beachtet werden muss und sich die gewünschte Lage, die Abdichtung und die Bildung des Halteringes quasi automatisch ergeben, wenn die betreffenden Spannschrauben mit einem geeigneten Anziehmoment montiert werden. In vielen Fällen braucht ferner nur der Haltering demontiert und ausgetauscht zu werden, während der Montagering an Ort und Stelle verbleiben kann. Die erfindungsgemässe Mitnehmeranordnung zeichnet sich daher durch eine besondere Montagefreundlichkeit bei gleichzeitig verbessertem Betriebsverhalten aus. Bezüglich anderer Aspekt der Erfindung wird auf die Ansprüche verwiesen.

Die Erfindung wird nachfolgend anhand einer Ausführungsform und der Zeichnung näher erläutert. Es zeigen:
- Fig. 1: in einer Ansicht in der Teilungsebene eine Gleitringdichtung in geteilter Ausführung mit einer geteilten Mitnehmeranordnung gemäss der Erfindung,
- Fig. 2: die Gleitringdichtung in geteilter Ausführung mit geteilter Mitnehmeranordnung in einer längsgeschnittenen Ansicht längs einer Schnittebene, die nicht mit der Teilungsebene nach Fig. 1 übereinstimmt,
- Fig. 3: einen Schnitt längs der Schnittebene III-III in Fig. 2, und
- Fig. 4: einen Schnitt längs der Schnittlinie IV-IV in Fig. 2.

Obschon die Erfindung nachfolgend in Verbindung mit einer Gleitringdichtung beschrieben ist, bei der nicht nur die erfindungsgemässe Mitnehmeranordnung, sondern auch die den stationären Part der Gleitringdichtung bildenden Teile in einer Radialebene geteilt sind, ist die Anwendung der Erfindung auf eine geteilte Gleitringdichtung nicht eingeschränkt. Vielmehr kann die erfindungsgemässe geteilte Mitnehmeranordnung auch Vorteile bei einer Gleitringdichtung bieten, bei der der stationäre Part nicht geteilt ist, indem dieser zur Montage und Demontage der geteilten Mitnehmeranordnung auf einer Welle axial verschoben werden kann, um die Mitnehmeranordnung freizulegen.

Der grundsätzliche Aufbau einer Gleitringdichtung ist dem Fachmann bekannt. Es genügt daher an dieser Stelle der Hinweis, dass die Gleitringdichtung ein Paar zusammenwirkende Gleitringe 1, 2 umfasst, von denen einer, nämlich der Gleitring 1 drehfest jedoch axial verschieblich gegenüber einem Dichtungsgehäuse 3 gehalten und dagegen durch eine Sekundärdichtung 4, bei der es sich um einen O-Ring handeln kann, abgedichtet ist. Der andere Gleitring 2 ist über eine Mitnehmeranordnung, die das allgemeine Bezugszeichen 5 trägt, mit einer Welle 6 fest verbunden, so dass sich der Gleitring 2 gemeinsam mit der Welle 6 drehen kann. Mit dem Bezugszeichen 7 ist ferner in der Zeichnung das Gehäuse einer Gerätschaft, z.B. einer Pumpe oder eines Verdichters angedeutet, dessen Inneres mittels der Gleitringdichtung gegenüber der Aussenumgebung abgedichtet werden soll.

Die Gleitringe 1, 2 haben gegenüberliegende zusammenwirkende Dichtflächen 8, 9, zwischen denen bei Betrieb ein Dichtspalt gebildet ist, um einen Bereich aussenumfänglich gegenüber einem Bereich innenumfänglich des Dichtspaltes abzudichten. Die Dichtflächen 8, 9 können bei Betrieb auch in berührendem dichtenden Eingriff miteinander stehen. Eine Vorspanneinrichtung (nicht gezeigt) ist vorgesehen, um einen der Gleitringe 1, 2, vorzugsweise den stationären Gleitring 1 mit einer axialen Vorspannkraft zu beaufschlagen, um die Dichtflächen 8, 9 der Gleitringe 1, 2 in einem vorgespannten Eingriff miteinander zu halten.

Die Gleitringdichtung ist in einer radialen Ebene durch ihre Mittenlängsachse geteilt ausgebildet. Die vorgenannten Aufbauteile der Gleitringdichtung sind daher in halbkreisförmige Segmente aufgeteilt. In der Zeichnung dargestellt sind die Stirnflächen jeweils eines der betreffenden halbkreisförmigen Segmente oder Ringhälften der Aufbauteile auf einer Seite der Mittenlängsachse, wobei die zugehörigen Stirnflächen an der gegenüberliegenden Seite der Mittenlängsachse zur Vereinfachung der zeichnerischen Darstellung weggelassen sind.

Die Stirnfläche des Dichtungsgehäuses 3 trägt das Bezugszeichen 10 und ist mechanisch so bearbeitet, dass ohne weitere Dichtungshilfsmittel eine dichtende Beziehung zwischen den aufeinander liegenden Stirnflächen 10 der beiden Ringhälften des Dichtungsgehäuses 3 zustande kommt, wenn diese mittels je eines Paares Spannschrauben 11, 12 an diametral gegenüberliegenden Seiten des Dichtungsgehäuses 3 fest gegeneinander verspannt sind und dabei die Stirnflächen 10 in flächiger Metall-auf-Metall Berührung aufeinander liegen. Die für die Erzielung einer ausreichenden dichtenden Eingriffnahme der anliegenden Stirnflächen 10 erforderliche mechanische Feinbarbeitung ist dem Fachmann grundsätzlich bekannt, so dass sich eine nähere diesbezügliche Erläuterung erübrigt.

Beispiel: Es wurde festgestellt, dass eine ausreichende dichtende Beziehung zwischen den Stirnflächen 10 bei einer Gleitringdichtung, die für eine Welle 6 mit einem Nenndurchmesser von 50 mm ausgelegt ist, erreicht wird, wenn die Spannschrauben 11, 12 der Grösse M8 mit einem Drehmoment von ca. 14 Nm festgezogen werden und die Abweichung in der Planität der aufeinander liegenden Stirnflächen 10 nicht mehr als 5 µm und die Rauigkeit Rₐ der Stirnflächen ≤ 1 µm beträgt.

Zur gegenseitigen Ausrichtung der gegenüberliegenden Stirnflächen 10 kann von jeder der Stirnflächen ein Positionierungsstift 13 abstehen, der in eine ausgerichtete Bohrung in der gegenüberliegenden Stirnfläche der anderen Ringhälfte eingreifen kann.

Erfindungsgemäss ist die Mitnehmeranordnung axial unterteilt in einen Haltering 14 und einen Montagering 16. Jeder dieser Ringe 14, 16 ist selbst wiederum längs einer radialen Ebene, ähnlich wie das Dichtungsgehäuse 3, in halbkreisförmige Segmente oder Ringhälften mit jeweils umfangsgerichteten Stirnflächen 15 bzw. 17 geteilt, die in der Betriebsstellung einander gegenüberliegen.

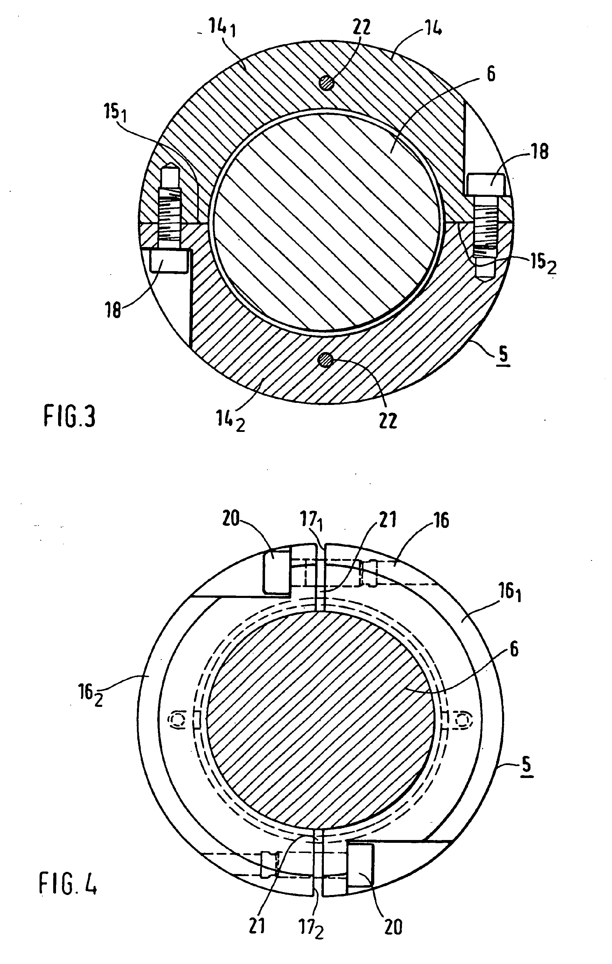

Fig. 3 zeigt den Haltering 14 im zusammengebauten Zustand, bestehend aus den Ringhälften 14₁, 14₂ mit den betreffenden Stirnflächen 15₁ und 15₂. Im Betriebszustand liegen die Stirnflächen 15₁ und 15₂ plan aufeinander, ohne dass zwischen diesen separate Dichtungsmittel vorgesehen sind. Zu diesem Zweck sind die Stirnflächen 15₁ und 15₂ in einer Art und Weise mechanisch feinbearbeitet, wie dies in Verbindung mit dem Dichtungsgehäuse 3 zuvor beschrieben wurde. Die Ringhälften 14₁, 14₂ können mittels eines Paares an diametral gegenüberliegenden Stellen vorgesehener Spannschrauben 18, die in tangential eingebrachten ausgerichteten Bohrungen in den Ringhälften nahe deren äusseren Umfängen eingreifen, fest gegeneinander verspannt werden. Ein oder mehrere Positionierungsstifte 19, ähnlich dem Stift 13 können vorgesehen sein, um die Stirnflächen 15₁ ,15₂ in einer gewünschten ausgerichteten Beziehung zueinander zu versetzen und zu halten.

Wie in Fig. 3 gezeigt ist, umgreift der Haltering 14 die Welle 6 mit einem geringen radialen Spiel, indem der Innendurchmesser des Halteringes 14 im montierten Zustand etwas grösser als der Aussendurchmesser der Welle 6 ist. Infolge davon wird die plane Anlage der Stirnflächen 15₁ ,15₂ nicht durch die Montage des Halteringes 14 auf der Welle 6 beeinträchtigt, wie es z.B. der Fall wäre, wenn zwischen dem Haltering 14 und der Welle 6 eine feste Eingriffnahme vorliegen würde.

Der Montagering 16 ist mit näheren Details in Fig. 4 gezeigt und umfasst ein Paar halbkreisförmige oder annähernd halbkreisförmige Segmente oder Ringhälften 16₁, 16₂ mit gegenüberliegenden umfangsgerichteten Stirnseiten 17₁, 17₂. Die Ringhälften 16₁, 16₂ können, wie dargestellt, durch ein Paar diametral gegenüberliegend angeordnete Spannschrauben 20 in ähnlicher Weise, wie dies in Verbindung mit dem Haltering 14 beschrieben wurde, gegeneinander verspannt werden. Anders als bei dem Haltering 14 sind jedoch die radialen Abmessungen am inneren Umfang der Ringhälften 16₁, 16₂ so, dass der Montagering 16 in festem klemmenden Eingriff mit dem äusseren Umfang der Welle 6 treten kann. Dies kann dadurch erreicht werden, dass der Innendurchmesser des Montageringes 16, wenn die Stirnseiten 17₁, 17₂ plan aufeinander liegen, um ein geeignetes Mass kleiner als der Aussendurchmesser der Welle 6 ist. Wenn daher der Montagering 16 auf der Welle 6 angeordnet ist, verbleibt nach dem Verspannen der Ringhälften 16₁, 16₂ zwischen den Stirnseiten 17₁, 17₂ ein Spalt 21, indem die Ringhälften 16₁, 16₂ die Welle 6 nach Art einer Rohrschelle fest umgreifen, um eine feste klemmende Beziehung zwischen dem Montagering 16 und der Welle 6 zu schaffen, so dass der Montagering 16 und die Welle 6 zu einer gemeinsamen Drehung veranlasst sind.

Statt eines Paares Spannschrauben 20, könnte auch nur eine derartige Schraube an einer Seite in Zusammenwirken mit einer Gelenkverbindung zwischen den Ringhälften 16₁, 16₂ an der gegenüberliegenden Seite vorgesehen werden. Schliesslich ist die Erfindung nicht auf eine drehfeste Verbindung zwischen dem Montagering 16 und der Welle 6 mittels der diese klemmend umgreifenden Ringhälften 16₁, 16₂ beschränkt. Der Montagering 16 könnte gegenüber der Welle 6 auch in anderer Weise drehfest positioniert werden, z.B. mittels Gewindestiften, die einen axialen Bereich des Montageringes gegen die Welle pressen.

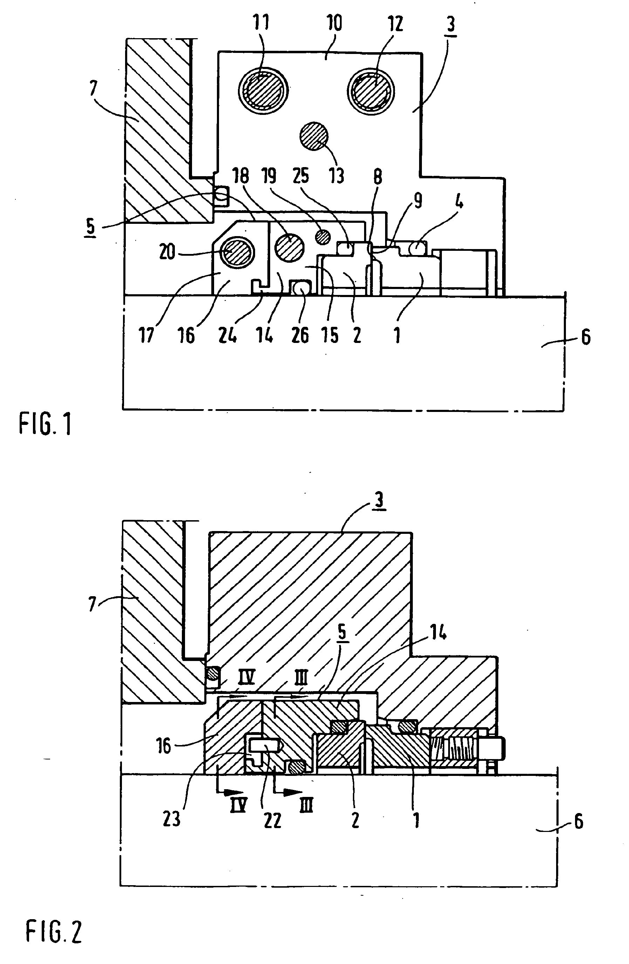

Der Haltering 14 und der Montagering 16 stehen ferner untereinander in drehmomentübertragender Verbindung, so dass eine Drehung des Montageringes 16 eine ebensolche Drehung des Halteringes 14 bewirkt. Zu diesem Zweck können in einem der Ringe 14, 16, bei der vorliegenden Ausführungsform am Haltering 14, ein oder mehrere umfänglich verteilte Mitnehmerstifte 22 vorgesehen sein, die von einer axialen Endfläche des Halteringes 14 axial abstehen und in dazu axial ausgerichtete Ausnehmungen 23 in der benachbarten axialen Endfläche des Montageringes 16 mit Spiel eingreifen können. Ausserdem werden die beiden Ringe 14, 16 nach Art einer Klauenkupplung axial zusammengehalten, wie dies bei 24 in Fig. 1 angedeutet ist. Wichtig ist, dass die axialen und umfänglichen Verbindungen zwischen den Ringen 14, 16 in Lossitz erfolgen, so dass durch die Montage auf der Welle 6 ggf. verursachte Verwerfungen des Montageringes 16 sich nicht auf den Haltering 14 übertragen können. Eine dichte Beziehung zwischen den einander zugewandten axialen Endflächen der Ringe 14, 16 ist nicht erforderlich.

Der rotierende Gleitring 2 soll im Haltering 14 ebenfalls mit Lossitz montiert sein. Zwischen dem Gleitring 2 und dem Haltering 14 kann eine teilbare Sekundärdichtung 25, beispielsweise in Gestalt eines teilbaren O-Rings vorgesehen sein. Eine weitere teilbare Sekundärdichtung 26, die ebenfalls als teilbarer O-Ring ausgebildet sein kann, ist zwischen dem inneren Umfang des Halteringes 14 und dem äusseren Umfang der Welle 6 vorgesehen, um den vorerwähnten dazwischen bestehenden geringen Spalt abzudichten.

Obschon bei der vorgenannten Ausführungsform der Erfindung eine Teilung der Mitnehmeranordnung in nur einer radialen Ebene vorgesehen ist, so dass der Montage- und Haltering jeweils hälftig geteilt sind, kann, wenn erwünscht, auch eine Teilung in mehreren radialen Ebenen vorliegen, so dass mehr als zwei kreissegmentförmige Abschnitte gebildet werden. Die Gleitringe bestehen vorzugsweise aus spröden Materialien, wie keramischen Materialien, Siliziumkarbid, Graphit und können deshalb durch Brechen leicht geteilt werden. Nach dem Zusammensetzen an den Bruchstellen wird wieder ein ausreichend dichtes Gefüge der Gleitringe erhalten. Schliesslich bietet die Erfindung auch Vorteile, wenn die Abdichtung zwischen den aufeinander liegenden Stirnflächen der Ringhälften des Halteringes anders als durch eine Feinbearbeitung der Oberflächen zustande kommt, indem z.B. dünne dichtende elastische Beschichtungen an den Stirnflächen vorgesehen werden. Infolge der erfindungsgemässen Masnahmen werden sich Verwerfungen des Montageringes nicht auf den Haltering und damit auf die Lage des Gleitringes auswirken, so dass dieser eine gewünschte vorgegebene Position zum stationären Gleitring während des Betriebs einnehmen und beibehalten kann.

## Patentansprüche

1. Geteilte Mitnehmeranordnung für eine Gleitringdichtung zur drehfesten Montage an einem rotierenden Bauteil und zur Übertragung einer Drehkraft auf einen an der Mitnehmeranordnung drehfest gehaltenen Gleitring (2), wobei die Mitnehmeranordnung (5) in wenigstens einer Radialebene unter Bildung kreissegmentförmiger, zu einer Ringform miteinander verspannbarer Abschnitte (14₁,14₂,16₁,16₂) geteilt ist, **dadurch gekennzeichnet, dass** die Mitnehmeranordnung (5) in einen geteilten Haltering (14) für den Gleitring (2) und einen geteilten Montagering (16) zur drehfeste Montage am rotierenden Bauteil axial unterteilt ist, welche Ringe (14,16) zur gemeinsamen Drehung miteinander verkuppelt sind, wobei der Haltering (14) kreissegmentförmige, zu einer Ringform mit einer radialen inneren Abmessung, die grösser als die radiale äussere Nennabmessung des betreffenden rotierenden Bauteils ist, zusammensetzbare gegeneinander abgedichtete Abschnitte (14₁,14₂) mit umfangsgerichteten Stirnflächen (15₁,15₂) umfasst, welche in Anlage miteinander stehen.

2. Mitnehmeranordnung nach Anspruch 1, **dadurch gekennzeichnet, dass** die umfangsgerichteten Stirnflächen (15₁,15₂) des Halteringes (14) in im Wesentlichen planer Metall-zu-Metall Berührung miteinander stehen und eine gegeneinander abdichtende Oberflächenbeschaffenheit aufweisen.

3. Mitnehmeranordnung nach Anspruch 2, **dadurch gekennzeichnet, dass** die umfangsgerichteten Stirnflächen (15₁,15₂) des Halteringes (14) eine Rauhigkeit ≤ 1,0 µm, vorzugsweise ≤ 0,8 µm, höchstvorzugsweise 0,5 µm aufweisen.

4. Mitnehmeranordnung nach einem der vorhergehenden Ansprüche, **dadurch gekennzeichnet, dass** der Haltering (14) und der Montagering (16) miteinander mit Spiel wenigstens in Umfangsrichtung verkuppelt sind.

5. Mitnehmeranordnung nach einem der vorhergehenden Ansprüche, **dadurch gekennzeichnet, dass** der Montagering (16) als Klemmring zur klemmenden Eingriffnahme mit dem rotierenden Bauteil ausgebildet ist.

6. Mitnehmeranordnung nach Anspruch 5, **dadurch gekennzeichnet, dass** der Montagering (16) wenigstens ein Paar kreissegmentförmige, zu einer Ringform mit einer radialen inneren Abmessung, die kleiner als die radiale innere Abmessung des Halteringes (14) ist, ergänzbare Abschnitte (16₁,16₂) umfasst

7. Mitnehmeranordnung nach einem der vorhergehenden Ansprüche, **dadurch gekennzeichnet, dass** der Gleitring (2) am Haltering (14) mit Lossitz gehalten ist.

8. Geteilte Gleitringdichtung mit einer geteilten Mitnehmeranordnung nach einem der Ansprüche 1 bis 7 und einem in wenigstens einer Radialebene in kreisegmentförmige miteinander verspannte und gegeneinander abgedichtete Abschnitte geteilten Dichtungsgehäuse (3), an dem drehfest ein Gleitring (1) zum Zusammenwirken mit dem Gleitring (2) der Mitnehmeranordnung (5) gehalten ist.

9. Gleitringdichtung nach Anspruch 8, **dadurch gekennzeichnet, dass** die Abschnitte des Dichtungsgehäuses (3) umfangsgerichtete Stirnflächen (10) aufweisen, welche in im Wesentlichen planer Metall-zu-Metall Berührung miteinander stehen und eine gegeneinander abdichtende Oberflächenbeschaffenheit aufweisen.

## Claims

1. A divided driver device for a mechanical face seal for a torque-proof assembly on a rotary component and for the transmission of a torque to a seal ring (2) held in a torque-proof manner on the driver device, in which the driver device (5) is divided in at least a radial plane by forming sections (14₁, 14₂, 16₁, 16₂) in the shape of segments of a circle, said sections being adapted to be clamped together in the shape of a ring, **characterized in that** the driver device (5) is axially sub-divided into a divided retaining ring (14) for the seal ring (2) and a divided mounting ring (16) for a torque-proof mounting to the rotary component, said rings (14, 16) being coupled together for rotation in common, whereby the retaining ring (14) comprises sections (14₁, 14₂) in the form of segments of a circle adapted to be placed together in mutually sealed manner in the shape of a ring having an inner radial dimension that is greater than the nominal outer radial dimension of the rotary component and which comprise peripherally aligned end faces (15₁, 15₂) abutting each another.

2. The driver device according to claim 1, **characterized in that** said peripherally aligned end faces (15₁, 15₂) of the retaining ring (14) are in essentially planar metal-to-metal contact and comprise a surface finish for mutually sealing them.

3. The driver device according to claim 2, **characterized in that** said peripherally aligned end faces (15₁, 15₂) of the retaining ring (14) have a roughness ≤1.0 µm, preferably ≤ 0.8 µm, and most preferably 0.5 µm.

4. The driver device according to one of the preceding claims, **characterized in that** the retaining ring (14) and the mounting ring (16) are coupled together with play in at least the circumferential direction.

5. The driver device according to one of the preceding claims, **characterized in that** the mounting ring (16) is in the form of a clamping ring for clamping engagement with the rotary component.

6. The driver device according to claim 5, **characterized in that** the mounting ring (16) comprises at least a pair of sections (16₁, 16₂) in the form of segments of a circle adapted to be built up to a ring shape having an inner radial dimension that is smaller than the inner radial dimension of the retaining ring (14).

7. The driver device according to one of the preceding claims, **characterized in that** the seal ring (2) is loosely seated on the retaining ring (14).

8. A divided mechanical face seal having a divided driver device according to one of claims 1 to 7 and a seal housing (3) divided in at least a radial plane into sections in the form of segments of a circle which are clamped together and mutually sealed, wherein a seal ring (1) is held non-rotatably on said housing for cooperating with the seal ring (2) of the driver device (5).

9. The mechanical face seal according to claim 8, **characterized in that** said sections of the seal housing (3) comprise peripherally aligned end faces (10) which are in essentially planar metal-to-metal contact and comprise a surface finish for mutually sealing.

## Revendications

1. Dispositif d'entraînement divisé pour un joint à bague coulissante destiné à être monté solidaire en rotation sur un composant rotatif et à transmettre une force de rotation sur une bague coulissante (2) retenue bloquée en rotation sur le dispositif d'entraînement, le dispositif d'entraînement (5) étant divisé dans au moins un plan radial avec formation de parties (14₁, 14₂, 16₁, 16₂) en forme de segment de cercle et pouvant être serrées les unes avec les autres pour obtenir une forme annulaire, **caractérisé en ce que** le dispositif d'entraînement (5) est divisé en une bague de retenue divisée (14) pour la bague coulissante (2) et une bague de montage divisée (16) destinée au montage solidaire en rotation sur le composant rotatif, lesdites bagues (14, 16) étant accouplées les unes aux autres pour tourner ensemble, la bague de retenue (14) comprenant des parties (14₁, 14₂) en forme de segment de cercle, étanchéifiées les unes par rapport aux autres, qui peuvent être réunies pour obtenir une forme annulaire dotée d'une dimension radiale intérieure supérieure à la dimension nominale radiale extérieure du composant rotatif correspondant, et qu'ont dotées des surfaces frontales orientées périphériquement (15₁, 15₂) en appui les unes avec les autres.

2. Dispositif d'entraînement selon la revendication 1, **caractérisé en ce que** les surfaces frontales orientées périphériquement (15₁, 15₂) de la bague de retenue (14) sont en contact métal sur métal sensiblement plat les unes avec les autres, et leurs états de surface leur permettant d'être étanchéifiées les unes par rapport aux autres.

3. Dispositif d'entraînement selon la revendication 2, **caractérisé en ce que** les surfaces frontales orientées périphériquement (15₁, 15₂) de la bague de retenue (14) présentent une rugosité ≤ 1,0 µm, de préférence ≤ 0,8 µm, de préférence encore de 0,5 µm.

4. Dispositif d'entraînement selon l'une quelconque des revendications précédentes, **caractérisé en ce que** la bague de retenue (14) et la bague de montage (16) sont couplées l'une à l'autre avec un jeu au moins dans la direction périphérique.

5. Dispositif d'entraînement selon l'une quelconque des revendications précédentes, **caractérisé en ce que** la bague de montage (16) est conçue comme une bague de serrage pour la mise en contact par serrage avec le composant rotatif.

6. Dispositif d'entraînement selon la revendication 5, **caractérisé en ce que** la bague de montage (16) comprend au moins une paire de parties (16₁, 16₂) en forme de segment de cercle, pouvant se compléter pour obtenir une forme annulaire dotée d'une dimension radiale intérieure inférieure à la dimension radiale intérieure de la bague de retenue (14).

7. Dispositif d'entraînement selon l'une quelconque des revendications précédentes, **caractérisé en ce que** la bague coulissante (2) est retenue sur la bague de retenue (14) avec un siège libre.

8. Joint à bague coulissante divisé comprenant un dispositif d'entraînement divisé selon l'une quelconque des revendications 1 à 7 et d'un boîtier de joint (3) divisé dans au moins un plan radial en parties en forme de segment de cercle serrées les unes avec les autres et étanchéifiées les unes par rapport aux autres et sur lequel une bague coulissante (1) est retenue solidaire en rotation pour coopérer avec la bague coulissante (2) du dispositif d'entraînement (5).

9. Joint à bague coulissante selon la revendication 8, **caractérisé en ce que** les parties du boîtier de joint (3) comprennent des surfaces frontales (10) orientées périphériquement en contact métal sur métal sensiblement plat les unes avec les autres, leurs états de surface leur permettant d'être étanchéifiées les unes par rapport aux autres.
